# EUROPEAN PATENT APPLICATION

(11) **EP 4 475 479 A1**
(43) Date of publication of application: **11.12.2024**
(21) Application number: 24178777.9
(22) Date of filing: 29.05.2024
(51) Int. Cl.: H04L 9/30, H04L 9/32, H04L 9/00

(54) **METHOD, APPARATUS AND COMPUTER PROGRAM**

(30) Priority: 09.06.2023 FI 20235645
(71) Applicant: Nokia Solutions and Networks Oy, 02610 Espoo (FI)
(72) Inventor: SWALENS, Janwillem, Brussels (BE); HEYDARI BENI, Emad, Antwerp (BE); HOSTE, Lode, Hove (BE)
(74) Representative: Nokia EPO representatives

(57) **Abstract**

There is provided an apparatus comprising: means for receiving information from a device, wherein the information comprises: i) data associated with the device, and ii) a signature of the data; means for receiving, from a requester device, a query. The apparatus also comprising means for executing the query with a program, using the information as an input, to return a result of the query, means for calculating a hash based on the data, and means for using a zero-knowledge proof system with the program to generate a proof associated with the executed query. The apparatus further comprising means for providing, to the requester device, a response comprising: the result of the query, the hash, the proof, and the signature of the data.

## Description

### Field

The present application relates to a method, apparatus, and computer program for a communication system.

### Background

A communication system may be a facility that enables communication sessions between two or more entities such as user terminals, base stations/access points and/or other nodes by providing carriers between the various entities involved in the communications path. A communication system may be provided, for example, by means of a communication network and one or more compatible communication devices. The communication sessions may comprise, for example, communication of data for carrying communications such as voice, electronic mail (email), text message, multimedia and/or content data and so on. Non-limiting examples of services provided comprise two-way or multi-way calls, data communication or multimedia services and access to a data network system, such as the Internet.

### Summary

According to an aspect, there is provided an apparatus comprising: means for receiving information from a device, wherein the information comprises: i) data associated with the device, and ii) a signature of the data; means for receiving, from a requester device, a query; means for executing the query with a program, using the information as an input, to return a result of the query; means for calculating a hash based on the data; means for using a zero-knowledge proof system with the program to generate a proof associated with the executed query; and means for providing, to the requester device, a response comprising: the result of the query, the hash, the proof, and the signature of the data.

In an example, the query is associated with at least one of: the device, and the data. In an example, the query is associated with at least one of: a group of devices, and a subset of the data. In an example, the query identifies at least one of: the device, and the data.

In an example, the signature is a hash of the data that has been signed by a private key of the device. In an example, the signature is a digital signature.

In an example, the information comprises: iii) randomly generated data, and the means for calculating comprises: means for calculating the hash based on: the data, and the randomly generated data.

In an example, the apparatus comprises: means for determining whether the received query adheres to a policy of a responder device; and means for, based on the determining, continuing with the execution of the query, or returning a response indicating an error to the requester device.

In an example, the means for executing the query with the program comprises: means for parsing and compiling the query to the program; and means for executing the program with the embedded query, using the information as an input, to return a result of the query

In an example, the apparatus comprises: means for receiving at least some further information from at least one of: the device, and at least one further device, wherein the least some further information comprises: i) further data, ii) a further signature, and iii) a further salt.

In an example, at least one of: the signature of the information, and the further signature of the at least some further information, was generated using a signature aggregation scheme.

In an example, the apparatus comprises: means for aggregating the signature and the further signature to generate an aggregated signature, wherein the response comprises the aggregated signature.

In an example, the information comprises metadata associated with at least one of: the device, and the data.

In an example, the metadata comprises at least one of: a device identifier and a timestamp.

In an example, the program returns: the result of the query, and the metadata.

In an example, the signature of the information comprises: a string including i) a hash of the data, and ii) metadata, wherein the string is signed by the device.

In an example, the string also comprises the randomly generated data, wherein the string comprising the randomly generated data is signed by the device.

In an example, the string is signed using a private key of the device.

In an example, the metadata comprises at least one of: a timestamp, a value of a counter, a category.

In an example, the information comprises: the data, the hash of the data, the device identifier, the timestamp, and the signature of the data, and a public key of the device.

In an example, the apparatus comprises: means for storing the information in a database, wherein the information is stored based on the metadata.

In an example, one of: the apparatus is for a responder device, the apparatus is comprised in a responder device, and the apparatus is a responder device.

In an example, the responder device is a first server.

According to an aspect, there is provided an apparatus comprising: means for providing, to a responder device, a query; means for receiving, from the responder device, a response comprising: a result of the query, a hash, a proof, and a signature associated with data; means for verifying: i) the result of the query using a zero-knowledge proof system using the proof as an input, and ii) the signature associated with the data using: the hash and a public key of a device.

In an example, the means for verifying comprises: means for verifying: iii) that the hash received in the response is valid.

In an example, the means for verifying comprises: means for verifying: iii) that the hash received in the response corresponds to a hash that can be validated, using: the signature, and the public key of the device.

In an example, the means for receiving comprises: means for receiving, from the responder device, the response comprising: a result of the query, at least two hashes, a proof, and an aggregated signature; and wherein the means for verifying comprises: means for verifying ii) the aggregated signature using: the at least two hashes and the public key of the device.

In an example, the means for receiving comprises: means for receiving, from the responder device, the response comprising: a result of the query, a hash associated with information of the device, and at least one further hash associated with further data of a further device, a proof, an aggregated signature, the public key of the device, and a public key of the further device; and wherein the means for verifying comprises: means for verifying ii) the aggregated signature using: the at least two hashes, the public key of the device, and the public key of the further device.

In an example, the response comprises metadata associated with at least one of: the device, and the data.

In an example, the metadata comprises at least one of: a device identifier and a timestamp.

In an example, the means for verifying comprises: means for verifying that a set of expected devices were included in the executed query using a list of device identifiers stored at a requester device, and the metadata received in the response.

In an example, the means for verifying comprises: means for verifying that devices associated with the executed query are trusted using: device identifiers of the metadata, and a list of device identifiers stored at a requester device.

In an example, the means for verifying comprises: means for verifying that the query was executed on recent data by comparing timestamp information of the metadata to a threshold time value.

In an example, one of: the apparatus is for a requester device, the apparatus is comprised in a requester device, and the apparatus is a requester device.

In an example, the requester device is a second server.

According to an aspect, there is provided a method comprising: receiving information from a device, wherein the information comprises: i) data associated with the device, and ii) a signature of the data; receiving, from a requester device, a query; executing the query with a program, using the information as an input, to return a result of the query; calculating a hash based on the data; using a zero-knowledge proof system with the program to generate a proof associated with the executed query; and providing, to the requester device, a response comprising: the result of the query, the hash, the proof, and the signature of the data.

In an example, the query is associated with at least one of: the device, and the data. In an example, the query is associated with at least one of: a group of devices, and a subset of the data. In an example, the query identifies at least one of: the device, and the data.

In an example, the signature is a hash of the data that has been signed by a private key of the device. In an example, the signature is a digital signature.

In an example, the information comprises: iii) randomly generated data, and the calculating comprises: calculating the hash based on: the data, and the randomly generated data.

In an example, the method comprises: determining whether the received query adheres to a policy of a responder device; and based on the determining, continuing with the execution of the query, or returning a response indicating an error to the requester device.

In an example, the executing the query with the program comprises: parsing and compiling the query to the program; and executing the program with the embedded query, using the information as an input, to return a result of the query

In an example, the method comprises: receiving at least some further information from at least one of: the device, and at least one further device, wherein the least some further information comprises: i) further data, ii) a further signature, and iii) a further salt.

In an example, at least one of: the signature of the information, and the further signature of the at least some further information, was generated using a signature aggregation scheme.

In an example, the method comprises: aggregating the signature and the further signature to generate an aggregated signature, wherein the response comprises the aggregated signature.

In an example, the information comprises metadata associated with at least one of: the device, and the data.

In an example, the metadata comprises at least one of: a device identifier and a timestamp.

In an example, the program returns: the result of the query, and the metadata.

In an example, the signature of the information comprises: a string including i) a hash of the data, and ii) metadata, wherein the string is signed by the device.

In an example, the string also comprises the randomly generated data, wherein the string comprising the randomly generated data is signed by the device.

In an example, the string is signed using a private key of the device.

In an example, the metadata comprises at least one of: a timestamp, a value of a counter, a category.

In an example, the information comprises: the data, the hash of the data, the device identifier, the timestamp, and the signature of the data, and a public key of the device.

In an example, the method comprises: storing the information in a database, wherein the information is stored based on the metadata.

In an example, the method is performed by a responder device.

In an example, the responder device is a first server.

According to an aspect, there is provided a method comprising: providing, to a responder device, a query; receiving, from the responder device, a response comprising: a result of the query, a hash, a proof, and a signature associated with data; verifying: i) the result of the query using a zero-knowledge proof system using the proof as an input, and ii) the signature associated with the data using: the hash and a public key of a device.

In an example, the verifying comprises: verifying: iii) that the hash received in the response is valid.

In an example, the verifying comprises: verifying: iii) that the hash received in the response corresponds to a hash that can be validated, using: the signature, and the public key of the device.

In an example, the receiving comprises: receiving, from the responder device, the response comprising: a result of the query, at least two hashes, a proof, and an aggregated signature; and wherein the verifying comprises: verifying ii) the aggregated signature using: the at least two hashes and the public key of the device.

In an example, the receiving comprises: receiving, from the responder device, the response comprising: a result of the query, a hash associated with information of the device, and at least one further hash associated with further data of a further device, a proof, an aggregated signature, the public key of the device, and a public key of the further device; and wherein the verifying comprises: verifying ii) the aggregated signature using: the at least two hashes, the public key of the device, and the public key of the further device.

In an example, the response comprises metadata associated with at least one of: the device, and the data.

In an example, the metadata comprises at least one of: a device identifier and a timestamp.

In an example, the verifying comprises: verifying that a set of expected devices were included in the executed query using a list of device identifiers stored at a requester device, and the metadata received in the response.

In an example, the verifying comprises: verifying that devices associated with the executed query are trusted using: device identifiers of the metadata, and a list of device identifiers stored at a requester device.

In an example, the verifying comprises: verifying that the query was executed on recent data by comparing timestamp information of the metadata to a threshold time value.

In an example, the method is performed by a requester device.

In an example, the requester device is a second server.

According to an aspect, there is provided an apparatus comprising: at least one processor, and at least one memory storing instructions that, when executed by the at least one processor, cause the apparatus to perform: receiving information from a device, wherein the information comprises: i) data associated with the device, and ii) a signature of the data; receiving, from a requester device, a query; executing the query with a program, using the information as an input, to return a result of the query; calculating a hash based on the data; using a zero-knowledge proof system with the program to generate a proof associated with the executed query; and providing, to the requester device, a response comprising: the result of the query, the hash, the proof, and the signature of the data.

In an example, the query is associated with at least one of: the device, and the data. In an example, the query is associated with at least one of: a group of devices, and a subset of the data. In an example, the query identifies at least one of: the device, and the data.

In an example, the signature is a hash of the data that has been signed by a private key of the device. In an example, the signature is a digital signature.

In an example, the information comprises: iii) randomly generated data, and the calculating comprises: calculating the hash based on: the data, and the randomly generated data.

In an example, the apparatus is caused to perform: determining whether the received query adheres to a policy of a responder device; and based on the determining, continuing with the execution of the query, or returning a response indicating an error to the requester device.

In an example, the executing the query with the program comprises: parsing and compiling the query to the program; and executing the program with the embedded query, using the information as an input, to return a result of the query

In an example, the apparatus is caused to perform: receiving at least some further information from at least one of: the device, and at least one further device, wherein the least some further information comprises: i) further data, ii) a further signature, and iii) a further salt.

In an example, at least one of: the signature of the information, and the further signature of the at least some further information, was generated using a signature aggregation scheme.

In an example, the apparatus is caused to perform: aggregating the signature and the further signature to generate an aggregated signature, wherein the response comprises the aggregated signature.

In an example, the information comprises metadata associated with at least one of: the device, and the data.

In an example, the metadata comprises at least one of: a device identifier and a timestamp.

In an example, the program returns: the result of the query, and the metadata.

In an example, the signature of the information comprises: a string including i) a hash of the data, and ii) metadata, wherein the string is signed by the device.

In an example, the string also comprises the randomly generated data, wherein the string comprising the randomly generated data is signed by the device.

In an example, the string is signed using a private key of the device.

In an example, the metadata comprises at least one of: a timestamp, a value of a counter, a category.

In an example, the information comprises: the data, the hash of the data, the device identifier, the timestamp, and the signature of the data, and a public key of the device.

In an example, the method comprises: storing the information in a database, wherein the information is stored based on the metadata.

In an example, one of: the apparatus is for a responder device, the apparatus is comprised in a responder device, and the apparatus is a responder device.

In an example, the responder device is a first server.

According to an aspect, there is provided an apparatus comprising: at least one processor, and at least one memory storing instructions that, when executed by the at least one processor, cause the apparatus to perform: providing, to a responder device, a query; receiving, from the responder device, a response comprising: a result of the query, a hash, a proof, and a signature associated with data; verifying: i) the result of the query using a zero-knowledge proof system using the proof as an input, and ii) the signature associated with the data using: the hash and a public key of a device.

In an example, the verifying comprises: verifying: iii) that the hash received in the response is valid.

In an example, the verifying comprises: verifying: iii) that the hash received in the response corresponds to a hash that can be validated, using: the signature, and the public key of the device.

In an example, the receiving comprises: receiving, from the responder device, the response comprising: a result of the query, at least two hashes, a proof, and an aggregated signature; and wherein the verifying comprises: verifying ii) the aggregated signature using: the at least two hashes and the public key of the device.

In an example, the receiving comprises: receiving, from the responder device, the response comprising: a result of the query, a hash associated with information of the device, and at least one further hash associated with further data of a further device, a proof, an aggregated signature, the public key of the device, and a public key of the further device; and wherein the verifying comprises: verifying ii) the aggregated signature using: the at least two hashes, the public key of the device, and the public key of the further device.

In an example, the response comprises metadata associated with at least one of: the device, and the data.

In an example, the metadata comprises at least one of: a device identifier and a timestamp.

In an example, the verifying comprises: verifying that a set of expected devices were included in the executed query using a list of device identifiers stored at a requester device, and the metadata received in the response.

In an example, the verifying comprises: verifying that devices associated with the executed query are trusted using: device identifiers of the metadata, and a list of device identifiers stored at a requester device.

In an example, the verifying comprises: verifying that the query was executed on recent data by comparing timestamp information of the metadata to a threshold time value.

In an example, one of: the apparatus is for a requester device, the apparatus is comprised in a requester device, and the apparatus is a requester device.

In an example, the requester device is a second server.

According to an aspect, there is provided an apparatus comprising: circuitry configured to perform: receiving information from a device, wherein the information comprises: i) data associated with the device, and ii) a signature of the data; receiving, from a requester device, a query; circuitry configured to perform: executing the query with a program, using the information as an input, to return a result of the query; calculating a hash based on the data; circuitry configured to perform: using a zero-knowledge proof system with the program to generate a proof associated with the executed query; and circuitry configured to perform: providing, to the requester device, a response comprising: the result of the query, the hash, the proof, and the signature of the data.

According to an aspect, there is provided an apparatus comprising: circuitry configured to perform: providing, to a responder device, a query; circuitry configured to perform: receiving, from the responder device, a response comprising: a result of the query, a hash, a proof, and a signature associated with data; circuitry configured to perform: verifying: i) the result of the query using a zero-knowledge proof system using the proof as an input, and ii) the signature associated with the data using: the hash and a public key of a device.

According to an aspect, there is provided a computer program comprising instructions, which when executed by an apparatus, cause the apparatus to perform at least the following: receiving information from a device, wherein the information comprises: i) data associated with the device, and ii) a signature of the data; receiving, from a requester device, a query; executing the query with a program, using the information as an input, to return a result of the query; calculating a hash based on the data; using a zero-knowledge proof system with the program to generate a proof associated with the executed query; and providing, to the requester device, a response comprising: the result of the query, the hash, the proof, and the signature of the data.

According to an aspect, there is provided a computer program comprising instructions, which when executed by an apparatus, cause the apparatus to perform at least the following: providing, to a responder device, a query; receiving, from the responder device, a response comprising: a result of the query, a hash, a proof, and a signature associated with data; verifying: i) the result of the query using a zero-knowledge proof system using the proof as an input, and ii) the signature associated with the data using: the hash and a public key of a device.

A computer product stored on a medium may cause an apparatus to perform the methods as described herein.

A non-transitory computer readable medium comprising program instructions, that, when executed by an apparatus, cause the apparatus to perform the methods as described herein.

An electronic device may comprise apparatus as described herein.

In the above, various aspects have been described. It should be appreciated that further aspects may be provided by the combination of any two or more of the various aspects described above.

Various other aspects and further embodiments are also described in the following detailed description and in the attached claims.

According to some aspects, there is provided the subject matter of the independent claims. Some further aspects are defined in the dependent claims. The embodiments that do not fall under the scope of the claims are to be interpreted as examples useful for understanding the disclosure.

List of abbreviations:
- AF:: Application Function
- AMF:: Access and Mobility Management Function
- AN:: Access Network
- BS:: Base Station
- CN:: Core Network
- DL:: Downlink
- eNB:: eNodeB
- gNB:: gNodeB
- IIoT:: Industrial Internet of Things
- LTE:: Long Term Evolution
- NEF:: Network Exposure Function
- NG-RAN:: Next Generation Radio Access Network
- NF:: Network Function
- NR:: New Radio
- NRF:: Network Repository Function
- NW:: Network
- MS:: Mobile Station
- PCF: Policy Control Function
- PLMN:: Public Land Mobile Network
- RAN:: Radio Access Network
- RF:: Radio Frequency
- SMF:: Session Management Function
- UE:: User Equipment
- UDR:: Unified Data Repository
- UDM:: Unified Data Management
- UL:: Uplink
- UPF:: User Plane Function
- 3GPP:: 3^{rd} Generation Partnership Project
- 5G:: 5^{th} Generation
- 5GC:: 5G Core network
- 5G-AN:: 5G Radio Access Network
- 5GS:: 5G System

### Description of Figures

Embodiments will now be described, by way of example only, with reference to the accompanying Figures in which:
Figure 1 shows a schematic representation of a control apparatus;
Figure 2 shows a schematic representation of a device;
Figure 3 shows a schematic representation of a system showing customer devices and a customer server communicating with a supplier server;
Figure 4 shows a schematic representation of the components of an example system;
Figure 5a shows a schematic representation of a system in a data collection and transmission phase;
Figure 5b shows a schematic representation of the system in a query phase;
Figure 5c shows a schematic representation of the system in an execution phase;
Figure 6 shows an example method flow diagram performed by an apparatus;
Figure 7 shows an example method flow diagram performed by an apparatus; and
Figure 8 shows a schematic representation of a non-volatile memory medium storing instructions which when executed by a processor allow a processor to perform one or more of the steps of the method of Figure 6 and/or Figure 7.

### Detailed description

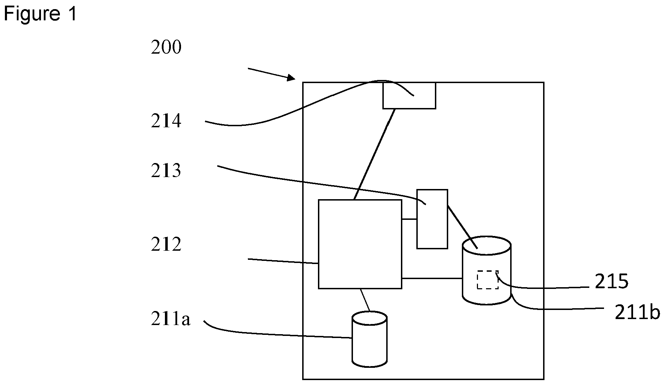

Before explaining in detail some examples of the present disclosure, certain general principles of wireless communications and devices are briefly explained with reference to Figures 1 to 2 to assist in understanding the technology underlying the described examples.

Figure 1 illustrates an example of a control apparatus 200. The control apparatus 200 may be for controlling functions of a device, server, cloud apparatus, etc. The control apparatus 200 comprises at least one random access memory (RAM) 211a, at least one read only memory (ROM) 211b, at least one processor 212, 213 and an input/output interface 214. The at least one processor 212, 213 is coupled to the RAM 211a and the ROM 211b. In other examples, the ROM 211b is not included in the control device 200, or is external to the control device 200. The at least one processor 212, 213 may be configured to execute an appropriate software code 215. The software code 215 may for example allow to perform one or more steps to perform one or more of the present aspects or examples. The software code 215 may be stored in the ROM 211b and/or the RAM 211a. In other examples, the software code 215 is stored in other suitable storage. The control apparatus 200 may be interconnected with another control apparatus 200. The control apparatus 200 may comprise one or more circuits, or circuitry (not shown) which may be configured to perform one or more of the present aspects or examples.

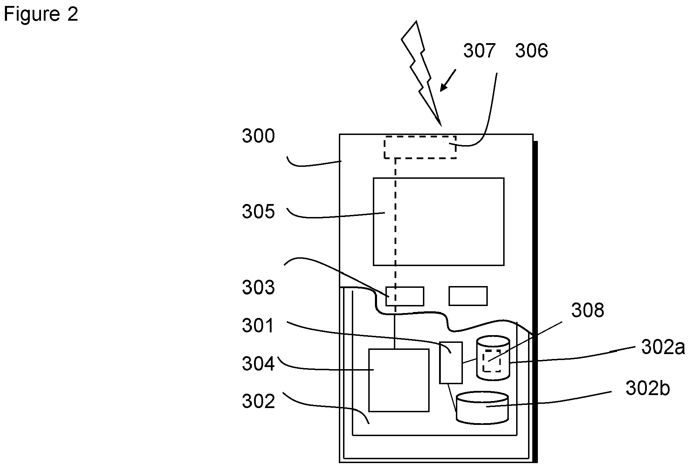

Figure 2 illustrates an example of a device 300, such as a terminal, vehicle, measurement device, sensor apparatus, data storage device, device with internal database storage, etc. The device 300 may be provided by any device capable of sending and receiving signals. The device 300 may provide, for example, communication of data for carrying communications. The communications may be one or more of sensor data, measurement data, multimedia, data, machine data and so on.

The device 300 may comprise means for sending and/or receiving signals. The device 300 may send and/or receive signals with wired means, or wireless means. For example, the device 300 may comprise wiring or circuitry for wired communications and/or transceiver circuitry. The device 300 may receive signals over an air or radio interface 307 via appropriate apparatus for receiving and may transmit signals via appropriate apparatus for transmitting radio signals. In Figure 2, a transceiver apparatus is designated schematically by block 306. The transceiver apparatus 306 may be provided for example by means of a radio part and associated antenna arrangement. The antenna arrangement may be arranged internally or externally to the device 300.

The device 300 may be provided with at least one processor 301, at least one memory ROM 302a, at least one RAM 302b and other possible components 303 for use in software and hardware aided execution of tasks it is designed to perform, including control of access to and communications with access systems and other communication devices. In other examples, the ROM 302a is not included in the device 300, or is external to the device 300. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a and/or the RAM 302b. In other examples, the software code 308 is stored in other suitable storage. The device 300 may comprise one or more circuits, or circuitry (not shown) which may be configured to perform one or more of the present aspects or examples. The device 300 may comprise one or more sensors (not shown). The device may be configured to transmit measurements of the one or more sensors to a receiving device or server, for example. The device 300 may comprise one or more private keys. The one or more private keys may be used by the device 300 for signing. For example, for signing data collected/gathered by the device 300.

The processor, storage and other relevant control apparatus may be provided on an appropriate circuit board and/or in chipsets. This feature is denoted by reference 304. The device 300 may optionally have a user interface such as keypad 305, touch sensitive screen or pad, combinations thereof or the like. Optionally one or more of a display, a speaker and a microphone may be provided depending on the type of the device.

One or more of the following examples are relevant to zero knowledge proofs (ZKP). Zero knowledge proofs are also known as a zero knowledge protocol.

A ZKP is a protocol with which one party (the "prover") can prove to another party (the "verifier") that a statement is true, without revealing additional information. For example, a ZKP can be applied to show that a result of a computer program is correct, without revealing the inputs to that program. This may work as follows: assume that there is a shared program 'P'. The prover takes the program `P' and an input `x', and calculates the output `y' wherein y=P(x). At the same time, the prover also generates a proof π (using a ZKP). The prover then sends the output y and the proof π to the verifier. The verifier can verify whether y is a valid output of the program P, but without needing to know x. Thus, the verifier can know that the program was executed correctly by the prover, while the prover does not need to reveal its input data.

A ZKP is not a mathematical "proof', rather, it is a protocol that convinces the verifier with high statistical certainty. Usually, the probability that the statement is not true is very small, ranging from e.g. 2^(-100) or even 2^(-255). In some systems, this is a configurable parameter.

The security and anonymity of company data is an important factor for a number of companies. However, it is also common for companies to want to share data between them. Therefore, this raises the issue of how to share the data without revealing sensitive or private data. For example, a supplier of devices that sells those devices to a customer, may wish to be sent data collected from those devices. This data is often useful to the supplier in order to problem-shoot and improve device performance. Therefore, it is in the best interest of the customer to provide the data, but the customer will not want to reveal any sensitive or private data. Examples of devices that could collect data are computers, cars, network equipment, sensors, etc.

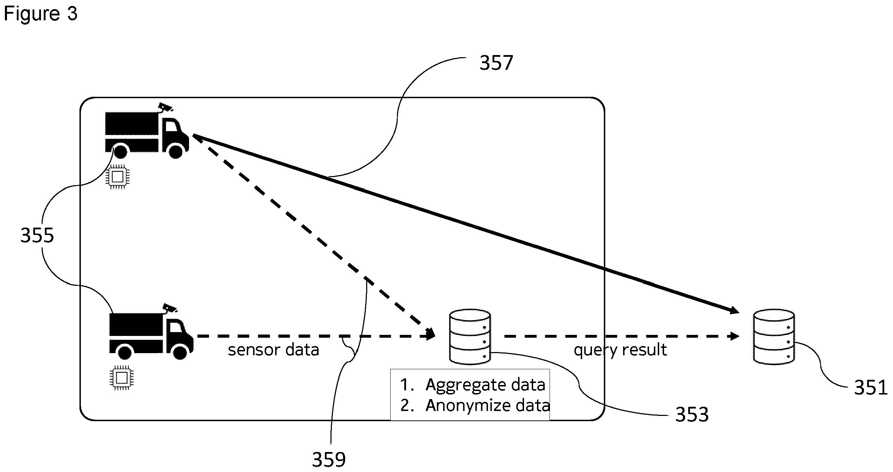

An example of such a system is shown in Figure 3, which is in the field of mining.

Figure 3 shows a schematic representation of the system showing customer devices and a customer server communicating with a supplier server.

A first company ("Company A") manufactures trucks used in mining. Company A may be termed the 'supplier'. There is provided a first server 351 owned by company A. A second company ("Company B") exploits a mine. Company B may be termed the 'customer'. There is provided a second server 353 owned by company B. Company B also owns trucks 355.

Company B buys the trucks 355 from Company A to operate their mine. Company A would like to, for example, gather detailed telemetry data about its trucks, to perform (predictive) maintenance on their current products and to improve their future products. For example, how often they are used in a day, what their average load is, what functionalities are used most often, or in what circumstances they are used.

Company A equips its trucks with sensors, and a processor that gathers the data and sends it to Company A's first server 351. This is shown with the arrow labelled 357. However, this solution is unacceptable to company B because sending detailed data about the use of the trucks directly to company A would allow them to derive sensitive information about company B's production. For example, company A could notice dips in the production output of company B's mine, which is information that company B does not want to expose to company A.

Alternatively, the trucks 355 send their sensor data to the second server 353 that is controlled by company B, which then aggregates and anonymizes the data, and sends the result to company A. This is shown with the arrows labelled 359. While this solution guarantees the privacy of company B's data, this may fail to meet standards or policies of company A. Company A cannot be sure that the data is processed correctly. Company B would be able to return false results or leave out sensor data when the data is processed on machines under their control. It may be in company B's interest to return false results, for example, during a negotiation with company A about the purchase of new equipment.

In a general scenario, when there are two parties (i.e. a supplier and a customer), and the supplier wants to query sensor data of devices/machines that have been bought by the customer, the customer does not want to leak sensitive data about their use of the machines. Therefore the customer requires the result to be aggregated or anonymized. The supplier, on the other hand, wants the guarantee that the data from all devices/machines is processed correctly.

Thus, a problem that has been identified is how to provide data from party B to party A without revealing sensitive data of party B, while also ensuring for party A that the data received is valid. Furthermore, when party A provides a request to party B for data, whether the request for data is acceptable to party B.

One or more of the following examples aim to address one or more of the problems identified above.

In examples, there is provided an apparatus comprising: means for receiving information from a device, wherein the information comprises: i) data associated with the device, and ii) a signature of the data; means for receiving, from a requester device, a query; means for executing the query with a program, using the information as an input, to return a result of the query; means for calculating a hash based on the data; means for using a zero-knowledge proof system with the program to generate a proof associated with the executed query; and means for providing, to the requester device, a response comprising: the result of the query, the hash, the proof, and the signature of the data. This will be described in more detail below.

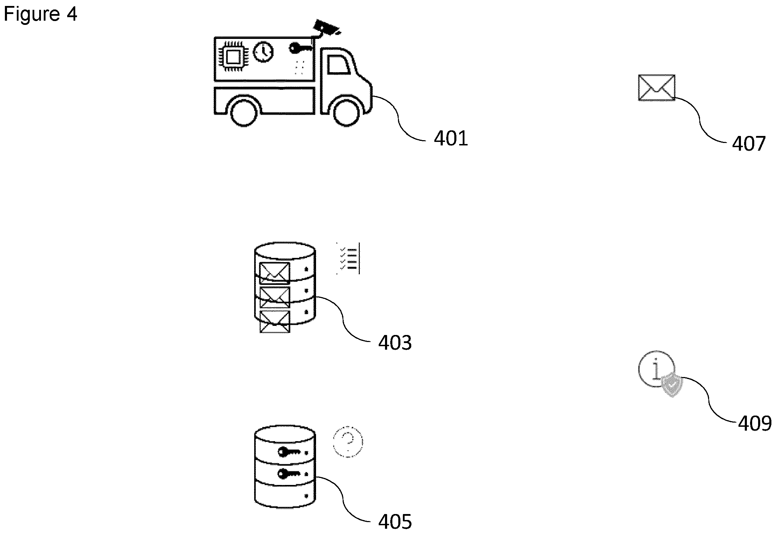

Figure 4 shows a schematic representation of the components of an example system.

There is provided a device 401. The device 401 may comprise one or more sensors, and one or more processors. The device 401 may be configured to collect data (using the one or more sensors). For example, the device 401 may be a vehicle (as shown in Figure 4), or a computer, or a networking device, etc. The device 401 may have an embedded a private key. For example, in the processor. The device 401 may keep a list of corresponding public keys. The device 401 may have a unique identifier assigned by the supplier of the device. The supplier may keep a mapping of the unique identifier to public key. In some example, the device identifier (unique identifier) may be its public key. This setup of identifiers and keys may be provided by a TPM (Trusted Platform Module), in some examples.

There is provided a first server 403. The first server 403 is owned/controlled by a first party (e.g. a customer). The first server 403 may be termed a 'customer server'. The device 401 is operated by the first party. In some examples, the device is also associated with a second party. For example, the device 401 has been bought, or leased, (by the first party) from the second party. The device 401 is configured to connect to the first server 403. The first server 403 may store a list of the public keys of the device 401, and other connected devices. The first server 403 may receive information and/or messages from the device 401 and other devices. The first server 403 may comprise memory for storing the received information. For example, the first server may comprise one or more databases. The first server 403 may comprise one or more query policies. A query policy is a policy (e.g. rules) associated with queries that may be received by the first server 403.

In other examples the first server 403 is replaced by an alternative device, such as for example, a computer, a terminal, a cloud computing device, etc.

There is provided a second server 405. The second server 405 is owned/controlled by the second party (e.g. a supplier). The second server 405 may be termed a 'supplier server'. The second server 405 may be able to provide one or more queries to the first server 403. A query may be associated with the device 401 (and others) or with data collected by the device 401. The second server 405 may generate the query, or may simply forward the query. The second server 405 may comprise a database of device IDs and public keys.

In other examples the second server 405 is replaced by an alternative device, such as for example, a computer, a terminal, a cloud computing device, etc.

There is provided information 407. The information may be in the form of a message 407, for example. One or more messages 407 may be provided from the device 401 to the first server 403. A message 407 may comprise at least one of: data (e.g. data associated with the device 401, or data collected by the device 401), a hash of the data, an ID of the device 401, a timestamp associated with the data, and a signature. The signature may be referred to as a digital signature. In some examples, the message 407 comprises the data, and the signature. The signature may be associated with the data. In some examples, the signature is associated with a private key of the device 401. In some examples, the timestamp and the device ID are considered to be part of the data. At least one of: the hash of the data, the ID, and the timestamp may be signed by the device 401 in the message 407. In some examples, the hash of the data is signed by the device 401.

For example, the signature may be a string. The signature of the device 401 may comprise: a string including i) a hash of the data, and ii) metadata, wherein the string is signed by the device. The device may sign the string using a private key of the device. Alternatively, the signature may be a package of information, such as a .asc or .pem file that is derived from applying a cryptographic operation to some input. The input in this example is a hash of the (sensor) data (e.g. "4c797d3e7599a0" string) combined with a metadata string (e.g. "1685628210, version 1" string). The metadata may be at least one of: timestamp, version, message identifier and more.

A cryptographic hash function is an algorithm that is used on data to produce a number called a hash. The hash is used to verify that data is not modified/tampered with/corrupted, etc. The hash will always be the same if the data is the same.

There is provided a result of a query with a proof 409. A query provided by the second sever 405 to the first server 403 may be executed by the first server 403. The first server 403 may output a result of the query with a proof of the execution (using a ZKP). The result of the query with the proof 409 may be provided as a response to the second server 405. This will be explained in more detail below.

It should be understood that the components of the system are shown as an example only to aid in the understanding of the disclosure. In other examples, other devices, and communications may be used. Furthermore, it should be understood that the use of 'customer' and `supplier' is used as an example only to understand the disclosure. In other examples, there are communications between any two points, two entities, two devices, etc.

In some examples, instead of the second server 405, another suitable device provided. This may be termed a 'requester device'.

In some examples, instead of the first server 403, another suitable device is provided. This may be termed a 'responder device'.

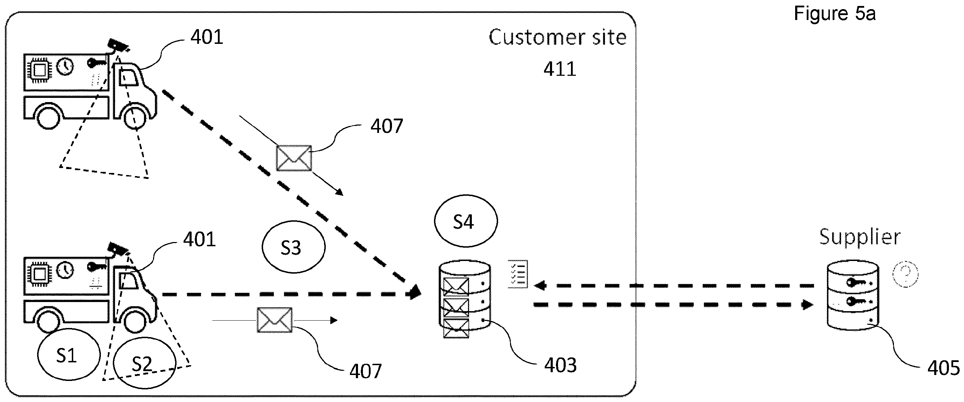

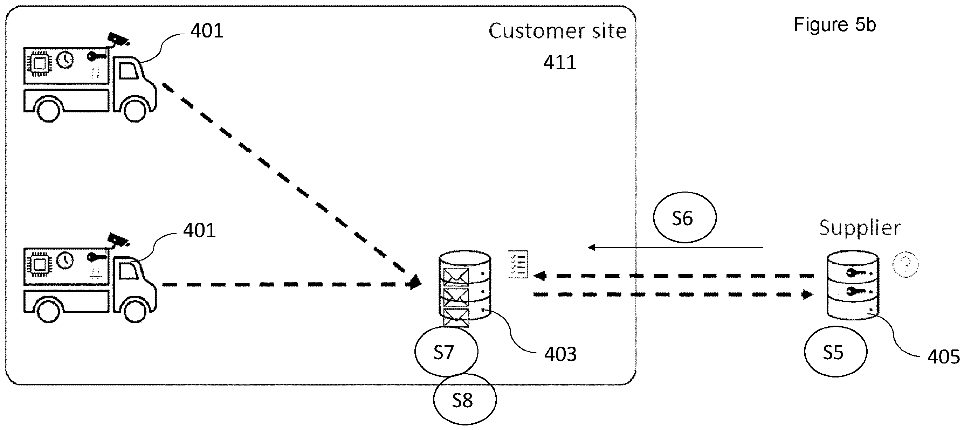

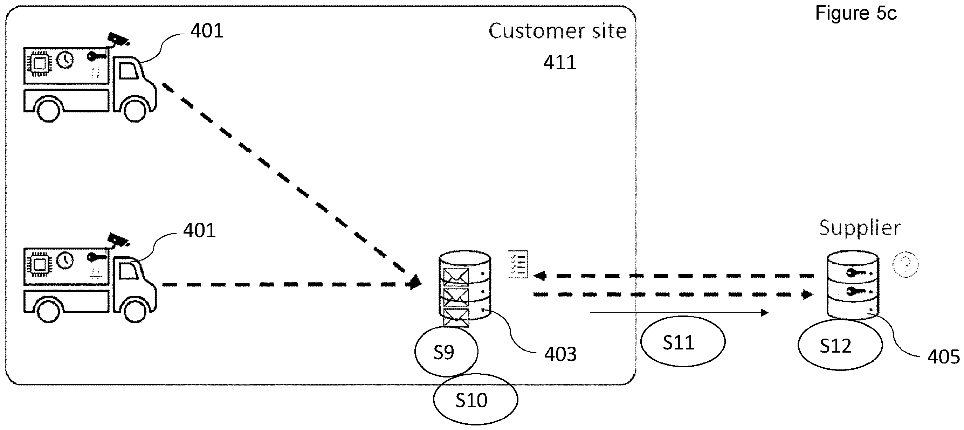

Figure 5a shows a schematic representation of a system in a data collection and transmission phase. The system comprises one or more of the components described in Figure 4. Similar components in Figure 5 will be given the same labelling as used in Figure 4.

The system comprises two devices 401, a first server 403, and a second server 405. The devices 401 and the first server 403 are grouped to form a 'first site' 411. The second server 405 is part of a 'second site'. The 'first site' may be termed the 'customer site', and the 'second site' the 'supplier site'. The sites are separate to indicate that each are controlled by a different party/company/entity.

At S1, the device 401 collects or determines data. For example, the device 401 collects sensor data at the device. The other device 401 also performs the same.

At S2, the device 401 uses a private key of the device 401 to sign the data. In some examples, the device 401 signs a hash of the data to form a signature. In some examples, the device 401 signs at least one of: a hash of the data, an identity of the device, and a timestamp associated with the data, to form the signature. The device 401 may use a hashing algorithm and the data in order to determine the hash. The other device 401 also performs the same.

At S3, each of the devices 401 sends information to the first server 403. The information may be in the form of a message 407. The message 407 comprises at least one of: the data (e.g. a payload of the message), a hash of the data, an identity of the device, (e.g. device ID), a timestamp associated with the data, and a signature. The identity of the device may be determined by the signature. For example, the device 401 signs the data with a private key, wherein the private key is unique to each device.

At S4, the first server 403 store the received information. The information may be stored in a database of the first server 403. In some examples, the received information/messages are indexed in the database based on the identity of the device (that sent the information). In some examples, the database keeps the latest information/message from each device 401. In this example, when subsequent information is received from a device 401, the subsequent information overwrites any data stored in the database for that respective device.

Figure 5b shows a schematic representation of the system in a query phase.

At S5, the second server 405 determines a query ("Q") for the first server 403. The query may be associated with one or more devices (e.g. devices 401). The query may be associated with certain data (e.g. certain types of sensor data).

In some examples, the second server 405 compiles the query Q to a program ("P"). The program P may be a provable program. The program P (when run) may comprise the following steps: executing the query Q on data stored in a database, verifying the signatures of each information/message used to execute the query Q, and returning the result of the query Q and metadata of each message used. Metadata may comprise at least one of: an identity of the device, and a timestamp. This will be described in more detail below.

A provable program (e.g. program P) is a program that may be input into a ZKP system. A provable program may be limited in their functionality in that, for example, some systems may only operate on integers, or have a fixed size, or be deterministic. Every input and output of these programs may be specified explicitly. Inputs and outputs may be secret or public. In provable program systems some operations may be slower (e.g. operations of floating-point numbers) and some operations may be faster or optimized (e.g. specific hashing algorithms or specific signature verification algorithms).

At S6, the second server 405 provides the query Q to the first server 403. The second server 405 may specify to the first server 403 which devices 401 should be part of the dataset (for the query Q). The second server 405 may specify to the first server 403 a time interval for the dataset (for the query Q).

At S7, the first server 403 receives the query Q. The first server 403 verifies whether Q adheres to a policy. In some examples, there may be plurality of policies. In that case, the first server 403 performs a verification for all policies. A policy may be associated with the first server 403. The policy may be associated with a customer, company, etc.

When a result of the verification is successful/positive, then the query Q continues. Otherwise, the first server 403 aborts and returns an error to the second server 405. The verification of the policy will be described in more detail below.

At S8, the first server 403 compiles the query Q to a program P. The program P at the first server 403 and the second server 405 is the same. This step of S8 is same as S5 (but executed by the 'customer site') to ensure no backdoors are present in program P. This compilation will be described in more detail below.

Figure 5c shows a schematic representation of the system in an execution phase.

At S9, the first server 403 runs/executes the program P. As discussed above, once run/executed, the program P returns: i) a result of the query Q, and ii) metadata of each message used.

At S10, the first server 403 uses a zero-knowledge proof system with the program P to generate a proof associated with the executed query Q. In this way, the first server 403 is also generating a corresponding proof to the executed query with the program P.

At S11, the first server 403 provides the result of the query Q, the metadata of the information/messages used (i.e. the returns from program P), and the generated proof to the second server 405. The result of the query Q, the metadata of the information/messages used (i.e. the returns from program P), and the generated proof may be provided in a response message.

At S12, the second server 405 receives the result of the query Q, the metadata of the information/messages used (i.e. the returns from program P), and the generated proof.

The second server 405 verifies that the query Q was calculated correctly (by the first server 403), using the program P's return values, the proof, and the program P.

In some examples, the second server 405 may verify that all requested devices 401 were included in the executed query Q. The second server 405 may verify this using the received metadata, e.g. using the identities of the devices.

In some examples, the second server 405 may verify that the devices 401 used in the query Q are trusted. The second server 405 may determine they are trusted using the identities of the devices (from the metadata) and the mapping of the identities of the devices to public keys.

In some examples, the second server 405 may verify that the query Q ran on recent data. This may be verified using the messages' timestamps.

In some examples, the second server 405 may verify that the query ran on all data. This may be verified using a counter. For example, a monotonic (incrementing) counter. A counter may be maintained on a device 401. The counter (e.g. the value of the counter) may be included as metadata in the message provided to the first server 403.

In this way, using the steps S1 to S12 as described above, the second server 405 (e.g. maintained by a supplier) can query a first server 403 (e.g. maintained by a customer of the supplier) and know that the results of the query are valid, with the customer knowing that no sensitive data has been released to the supplier.

In the system described, verifying signatures and/or signed data may be a complex procedure. The verifying may be complex in terms of the computational power needed to execute the verification. Due to this, the verifying of the signatures/signed data may take a long time. Executing this in a zero-knowledge proof also increases this computational cost. For example, for 100 numbers, S9 of Figure 5c may take up to 3 seconds, while S10 of Figure 5c may take up to 60 seconds. Therefore, in some examples, the verification of the signature/signed data is moved to the verifier. In this case, the verifier is the second server 405 (e.g. the supplier).

In some examples, when the program P is run/executed, the program P comprises the following steps: i) executing the query Q on data stored in the database, ii) calculating a hash of the data (of each message), and iii) returning: a result of the query Q, metadata of each message used, and the hashes. In this way, the verification of the signatures of each messaged used to execute the query Q is not performed by the program P. In this example, in S11, the first server 403 provides to the second server 405: the return values of program P, the hashes, the corresponding proof, and the signatures of the messages.

In some examples, the device 401 includes a salt in the information provided to the first server 403 in S3. Each device 401 may include a salt in each message provided to the first server 403. A `salt' is data that is generated randomly. For example, generated randomly in a cryptographically secure manner. In cryptography, a salt is random data that may be used as an additional input to a one-way function that hashes data. In some examples, the salt may be unique per information provided or per message provided. In some examples, the salt may be unique per data element. A unique salt will improve security.

In some examples, the hash that is sent in the message 407 includes the salt. The hash may be generated by running the hashing algorithm on the data and the salt.

By moving the verification of the signature/signed data from the prover (e.g. the first server 403) to the verifier (e.g. the second server), this greatly reduces the cost of generating proofs for the first server 403.

When the verification of the signature/signed data has been moved, in some examples, two additional steps are added for verification at the second server 405. For example, two additional steps may be added as part of S12 of Figure 5c.

Firstly, the second server 405 verifies that the signatures are correct. For example, verifying that the signature is a valid signature using the message hash and the public key of the device.

Secondly, the second server verifies that the hashes signed by the signatures correspond to the hashes listed in the return values of program P.

In examples, once the second server 405 has performed these verifications, and they are successful, then the second server 405 (e.g. supplier) knows that the results of the query Q are valid.

As shown above, the first server 403 may send the signatures of all messages to the second server 405 (without verifying the signature), in order to reduce the amount of processing performed at the first server 403.

In some examples, the first server 403 performs an aggregating of the signatures. For example, the first server 403 aggregates the signatures from the two devices 401 sending messages, as shown in Figure 5a. The first server 403 may provide the aggregated signature to the second server 405 in the response message of S11.

By aggregating the signatures, this uses less bandwidth in order to provide/transmit the signatures, and uses less storage space at the second server 405.

In some examples, the signatures of the devices 401 are generated using a signature aggregation scheme such as for example a Boneh-Lynn-Shacham (BLS) scheme.

In some examples, before S11 of Figure 5c, the signatures of the messages used in the program P are aggregated using the BLS signature aggregation scheme. In S11, the first server 403 may then send to the second server 405: the return values of program P, the corresponding proof, the aggregate signature, and the list of public keys and/or device IDs of the messages.

When the verification of the signature/signed data has been moved, in some examples, two additional steps are added for verification at the second server 405. In step 12, these two steps are added, verifying:
Firstly, the second server 405 verifies that the aggregate signature is correct. For example, verifying that the signature is a valid signature given the list of message hashes and public keys.

Secondly, the second server 405 verifies that the hashes signed by the signatures correspond to the hashes listed in the return values of program P.

In examples, once the second server 405 has performed these verifications, and they are successful, then the second server 405 (e.g. supplier) knows that the results of the query Q are valid.

The aggregating of the signatures reduces the bandwidth and storage space needed for sending signatures. It also reduces the time to verify the signature by the verifier (e.g. second server 405).

In some examples, the public key of a device 401 is used as its identifier. In this example, it is then not needed to store both the identifier of the device and the public key.

In some examples, metadata of a message (e.g. S2) is extended with an increasing number. This allows a supplier to verify whether messages have been left out of the query Q. In this example, a timestamp may not be needed. Said another way, the metadata of an increasing number replaces the timestamp.

In some examples, each message (e.g. S2) is assigned to a category, such as for example, a label or a tag. Hence, in S2, the message will contain this category. In S4, messages are then indexed on both the ID of the device and category. In S5, the query Q may use messages of one or more categories.

In some examples, the program P contains extra checks as additional substeps in S5. This may increase the processing of S5 but reduce the processing done in S12. For example, a check that all required devices are included is performed in S5. For example, a check that the message of a device belongs to a restricted set of devices is performed in S5. This construction may use a Merkle Tree structure to efficiently prove that an identity of a device is part of a set.

For example, a check that the messages are part of a particular category is performed in S5. For example, a check that the messages are signed with a key from a list of trusted public keys is performed in S5. For example, a check that the timestamps of all used messages are "recent" is performed in S5. The determination of "recent" may comprise comparing each timestamp to a threshold time or value. For example, a check that that all data is processed by checking if the counter increases in a monotonic fashion is performed in S5.

In some examples, for S7 of Figure 5b, a human will manually verify if a query Q is allowed.

In some examples, there is a pre-defined list of allowed queries Q and (only) queries from that list can be executed.

In some examples, the different devices 401 are owned by (or bought from) different suppliers. The supplier requesting the query Q may be different from the owners of the devices 401. For example, there may be many parties wanting to derive (same or different) insights from the same dataset.

One or more of the examples shown above, alongside Figures 5a to 5c, mean that a first party (the "customer") can gather and aggregate sensor data, and send the result to a second party (the "supplier"), so that (1) the customer is guaranteed that no sensitive data is leaked, and (2) the supplier is guaranteed that the results were processed correctly.

The supplier is guaranteed that: (1) the data is coming from trusted devices and/or sensors, (2) the data has not been tampered with by the customer, and (3) was aggregated according to a pre-approved algorithm.

The customer is guaranteed that a query on the data can only run if it is approved, hence, leaks no confidential data.

It should be understood that the examples shown above alongside Figures 5a to 5c as an implementation between a supplier and customer, using a server of the supplier and a server of the customer is as an example only. The mechanism shown is equally applicable to other scenarios and systems. Furthermore, one or more of the steps shown in Figures 5a to 5c may not be performed, in some examples, or may be performed in a different order.

One or more of the features of S1 to S12 of Figures 5a to 5c will now be described in more detail.

The features for implementing the mechanism will be split into six different sections. It should be understood that the splitting into six sections is purely to aid in the understanding of the disclosure. In this section, we describe:
Section 1 is related to information about the data, in an example implementation.
Section 2 is related to the gathering of data. For example, the gathering of sensor readings. For example, S1 to S4 of Figure 5a.
Section 3 is related to verifying that a query adheres to a policy. For example, to S7 of Figure 5b.
Section 4 is related to compiling a query to a program. For example, to S5, S6, and S8 of Figure 5b.
Section 5 is related to running the program and generating a proof. For example, S9-S11 of Figure 5c.
Section 6 is related to verifying the proof. For example, S12 of Figure 5c.

The following examples use JavaScript object notation (JSON) as a data representation, structured query language (SQL) as a query language, and open policy agent (OPA) as a policy language. However, these are examples only. The mechanism is not limited to the described data representation (JSON), the queries (SQL) or the policy language (OPA, human language). Other data formats such as YAML, comma-separated values (CSV), Avro, extensible markup language (XML), etc, other queries interfaces such as arbitrary programs in C, C++, Java, JavaScript, etc, are equally applicable.

Furthermore, the following examples use mining as an example use case. It should be appreciated that this is an example only in order to aid in the understanding of the disclosure. Other use case examples include computing, networking, telemetry, etc.

**Section 1:** In examples, devices (e.g. device 401) gather sensor readings in key-value pairs. They are stored in JSON. For example, a mining truck may send the following data:

```
 {
   "id": 1001,
   "timestamp": "2022-08-01T21:34:56Z",
   "model": "797F",
   "engine_temperature": 75.3,
   "speed": 23.57,
   "fuel_level": 2423.3,
   "fuel_max": 3785.1,
   "error_log": [{"timestamp": "2022-08-01T20:00:12Z", "code": 101, "priority": "high",
 "message": "engine failure"}]
 }
```

Here, the device with 'id 1001' sent a message at 2022-08-01T21:34:56Z, containing data such as its engine temperature (75.3°C), speed, fuel in its tank, and previous errors.

Queries may be specified in SQL. Some examples for the mining scenario:
SELECT id, fuel_level FROM devices;
SELECT model, AVERAGE(fuel_level) FROM devices GROUP BY model;
SELECT code, COUNT(code) FROM errors GROUP BY code ORDER BY COUNT(code) DESC FETCH FIRST 5;

These queries would:
- Return the device ID and fuel level of each truck.
- Group the different models of trucks in the database, and return the average fuel level per model.
- Return the 5 most frequently occurring error codes, and how often they occur.

In this example, only SELECT queries are supported.

Similar to PostgreSQL, queries may use nested JSON structures:
SELECT error_log FROM devices WHERE error_log->"priority" = "high";
SELECT id FROM devices WHERE error_log->"priority" = "high";

These queries would:
- Return all errors with high priority.
- Return all device IDs that have an error with high priority. If there are multiple errors, the ID is returned multiple times.

Policies for queries (or query policies) decide which data may be queried. For example, policies may be specified in Rego. Rego is a declarative query language based on Datalog that adds support for JSON. In Rego, a user may specify a 'view' on the data, and this view can be accessed using a query.

For example, this is a policy:

```
 old(message) {
   timestamp := time.parse_rfc3339_ns(message.timestamp)
   diff := time.now_ns() - timestamp
   min_diff := 90 * 24 * 60 * 60 * 1000000000 # 90 days in nanoseconds
   diff >= min_diff
 }
  
 old_errors = [error | error = input.errors[_]; old(error)]
```

The rule (old(message)) defines that a message is old if its timestamp is at least 90 days ago. It then defines old_errors as the errors that satisfy this rule. The supplier can now execute queries on a 'virtual table' old_errors. Said another way, the querier or supplier is allowed to execute any query in which the FROM clause is old_errors. This may be thought to be equivalent to specifying a database view in SQL.

For example, this is a further policy:

```
 allowed(error) {
   error.priority = "high"
 }
  
 allowed(error) {
   error.priority = "medium"
   errors_with_code := [error_ | error_ = input.errors[_]; error_.code == error.code]
   count(errors_with_code) >= 5
 }
  
 important_errors = [error | error = input.errors[_]; allowed(error)]
```

This rule (allowed(error)) specifies that a query is allowed to access the virtual table important_errors, which contains (1) any error with priority high, and (2) errors with priority medium when there are at least 5 errors with the same code. Finally, this policy allows access to all errors, using the virtual table errors:

```
 errors = input.errors[_].
```

**Section 2:** In some examples, each device (e.g. device 401) gathers/measures data. For example, gathering data from its sensors. The device then combines the data into a message.

The data (e.g. sensor readings) may be combined into a payload for a message. In this way, the payload of a message may comprise data from one or more different inputs, at one or more different times. This may be stored in a format such as JSON, for example.

The message payload, the identity of the device (e.g. device ID), and the current timestamp may be concatenated into a list of bytes. The list of bytes is hashed using a cryptographically secure hash. For example, the secure hash may be one of: SHA256, Keccak256, Poseidon, etc. The output of the hashing operation is called a hash, which is a number. This hash is signed using the private key of the device using a cryptographic signature algorithm. For example, the algorithm may be one of: Elliptic Curve Digital Signature Algorithm (ECDSA), Edwards-curve Digital Signature Algorithm (EdDSA), and Boneh-Lynn-Shacham digital signature (BLS).

The message may comprise the payload, the hash, the metadata, and the signature. The metadata may comprise at least one of: a device ID and timestamp. The message may also contain the public key of the device.

In some examples, a randomly generated list of bytes (e.g. a salt) is added to the data that is hashed. In this way, the payload, the identity of the device (e.g. device ID), the current timestamp, and the salt, are concatenated into a list of bytes. The list of bytes (including the salt) is hashed using a cryptographically secure hash. The salt may also be added to the metadata provided. The addition of the salt by the device may help to prevent a "dictionary attack" that would allow the verifier to uncover the original sensor readings.

The message is then sent to a customer's server (e.g. the first server 403). The customer server stores the message(s) it receives in a database, including their metadata and signature. The customer server may receive messages from one or more devices (e.g. the devices 401 of Figure 5a). The received messages may be indexed based on the device ID. This will lead to faster look-up, and thus a reduced latency in the system. In some examples, the database may store the latest message for each device. In this examples, any older messages for the device will be deleted.

**Section 3:** In some examples, there is a parsing and compiling of queries. For example, using an SQL query. In the following example, queries are specified using the syntax of SQL. Other languages or formats may be used in other examples.

For example, an SQL query may be:
SELECT id, fuel_level FROM devices;
SELECT model, AVERAGE(fuel_level) FROM devices GROUP BY model;
SELECT fault_code, COUNT(fault_code) FROM faults GROUP BY fault_code ORDER BY COUNT(fault_code) DESC FETCH FIRST 5;

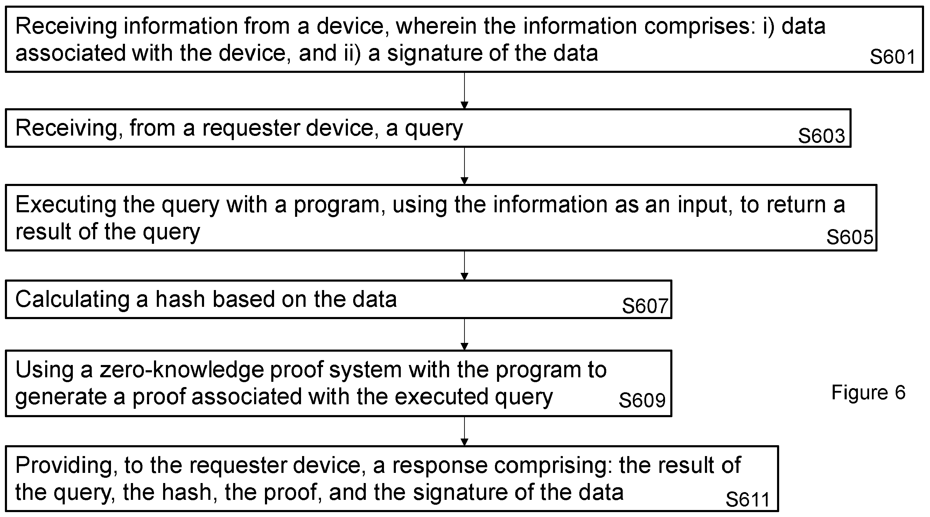

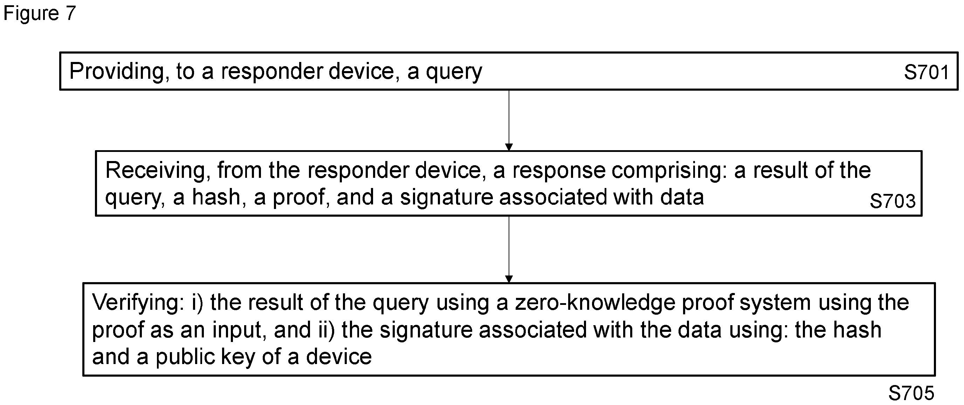

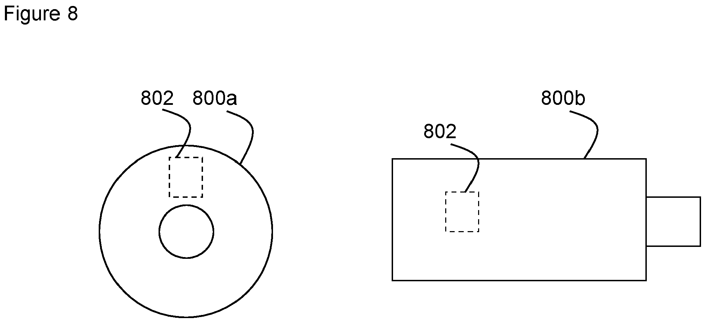

In this example, only SELECT queries are supported. In general, the syntax of a query is as follows:
SELECT <columns> FROM <table> WHERE <predicate on rows> GROUP BY <columns> HAVING <predicate on groups> ORDER BY <columns> OFFSET <offset> FETCH FIRST <limit>

Here, in this example, <columns> is a comma-separated list of fields, which may be wrapped in an aggregation function. For example, AVERAGE(col1), COUNT(col2), SUM(col3).

Standard SQL queries may be limited in the following ways, in some examples:
- Standard SQL supports the use of multiple tables in the FROM clause. In some examples, only one table can appear in the FROM clause. In other examples, this multiple table feature is supported.
- The GROUP BY clause may contain at most one column. In other examples, multiple columns are supported in the query.
- When a GROUP BY clause is used, (a) the <columns> should contain the column on which the data is grouped, and (b) all other selected columns should be wrapped in aggregation functions. The part (a) may be considered a technical requirement as this column is used further in a protocol of the compilation. The part (b) may be considered a restriction to improve privacy.
- <columns> should contain the primary key of the table. This may be considered to be a technical requirement as these IDs are required further in the protocol. These IDs may be a unique identifier for the message. This may be a unique number for the message (e.g. the field "id" in the JSON example above), or a combination of fields in the message that uniquely identify the message (e.g. device id + field name [an example of a field name is "engine_temperature" in the JSON example above]).

In examples, a query (such as one of the example queries above) is parsed. Once parsed, a program fragment is compiled that executes the query. The parsing and/or compiling may be performed by a suitable device or apparatus, such as for example the first server 403. This may use an existing, standard algorithm to compile an SQL query.

In examples, the query is embedded in a provable program. The previously generated program fragment may be embedded in the program P. This program P may comprise four phases (when executed/run):
1) It loads in the input data. For example, all messages in the table indicated with 'FROM' in the query.
2) It executes the query that was generated in the 1) (i.e. the previous step).
3) It verifies the signatures of the messages that are used.
4) It returns: i) the result of the query, ii) the metadata of each message used.

As described above, in some examples, additional steps by the program P are added and/or changed here. In particular, in one example, 3) re-calculates the hashes of the messages, and 4) outputs the result of the query and these hashes. This is discussed in the next section.

The four phases described above may form a provable program. As described above, provable programs may have secret and public inputs. In this example, the messages are secret inputs, while their signatures are public inputs. The outputs returned in phase 4) are public outputs.

**Section** 5: In examples, the program is run and a proof is generated. In some examples, a zero knowledge proof or zero knowledge protocol (ZKP) system is used to generate the proof. Any suitable ZKP system may be used to run the program and generate a corresponding proof. Examples of suitable ZKP systems include Circom, Zokrates, or RISC Zero. In each of these ZKP systems, three phases may occur:
Firstly, the program P is compiled to a representation used by the ZKP proof system. This may be an arithmetic circuit, a R1CS (Rank-1 Constraint System), or a list of instructions executed by a zk-VM (zero-knowledge Virtual Machine. For example, RISC Zero is a zk-VM for the RISC-V instruction set.

Secondly, the compiled program is executed with a given input (e.g. using data from messages as an input), producing an output and a trace. The trace may be referred to as a journal or a witness.

Thirdly, a proof is generated, given the trace. The trace may be used to generated the proof. The trace may be transformed into the proof. A proof consists of a number of bytes. The proof may be referred to as a seal.

The second phase may be referred to as the "program execution", while the third phase may be referred to as the "proof generation".

In some examples, the program P (discussed above in section 4) is modified to remove step 3 from the four phases, which verifies signatures. In this example, program P calculates hashes of the messages. This may be considered to be a recalculation as the hashes have already been calculated by each device. Instead of verifying the signature within program P, the prover (e.g. the first server 403) transmits the signatures to the verifier (e.g. the second server). This reduces the time spent in both the program execution phase and the proof generation phase.

In some examples, the signatures are aggregated before being transmitted. The signatures may be aggregated using the BLS signature aggregation scheme. This aggregation occurs outside the (proven) program P.

Once the program P has been executed and the proof generated, the following response is transmitted to the verifier (e.g. the second server 405) comprising: the result of the query, the metadata of each message that was used, and the proof.

In some examples, the hashes and signatures of all messages are also included in the response. This may occur when the verification of the signatures is not performed by the prover (e.g. the first server 403).

In some examples, the hashes of all messages, the aggregate signature are transmitted to the verifier, and either: the list of public keys, or the list of device identifiers of the device corresponding to each message are also included in the response. This may occur when the verification of the signatures is not performed by the prover and the signatures are aggregated.

**Section 6:** In some examples, there is a verification of the proof. The proof may be verified by the verifier (e.g. second server 405) when the verifier receives the response from the prover.

To verify a result, the verifier may execute one or more of the following steps:
1) The verifier uses the ZKP system to verify that the program was executed correctly. This uses the program P, the proof, and the return values. In this way, the response/executed query is verified based on the program P, the received proof, and the received return values. The return values may comprise the query result, metadata, etc.
2) The verifier verifies that all expected devices were included: from the list of device IDs stored by the verifier (e.g. supplier). The devices that are expected to be used in the query should all appear in the messages' metadata received from the prover.
3) The verifier verifies that the devices associated with the executed query are trusted. The device IDs found in the metadata received should all appear in the list of device IDs stored by the supplier.
4) The verifier verifies that the query ran on recent data. This verification may use the messages' timestamps comprised in the received metadata.

In some examples, the verifier does not execute one more of the verifications above.

When the verifier receives the signatures of the devices in the response message, the verifier may execute 5) and 6) below:
5) The verifier verifies all signatures. This may use a verification algorithm of the signature scheme that was used. The verification for each signature may use, as an input: the hash, the corresponding public key, and the corresponding signature. This verification will return "true" if this signature is valid for that hash and public key.
6) The verifier verifies that the hashes used in S5 match those returned by the program P. In this way, the hash (or hashes) received in the response is verified.

The signature may be a string (originating from the device that generated the data) which allows the first server (e.g. customer server) to check that a certain private key was used to sign the data, using the public key. In this way, the device uses the private key to sign the data, while a verifier (e.g. supplier server) uses the public key (which is derived/linked from the private key) together with the signature to verify if a certain hash was signed. In this way, a signature verifying function takes at least inputs: 1) the public key of the device, 2) the signature, 3) the hash. In some examples, the signature verification function also has at least one further input: 4) metadata. The signature verification function will return "true" if this hash and metadata was correctly signed by that device.

When the verifier receives the aggregated signature in the response message, the verifier may execute 5a) and 6a) below:
5a) The verifier verifies the aggregate signature. This may use the BLS verification algorithm. The verification may use, as an input: the hashes (for all messages), the list of corresponding public keys, and the aggregate signature. The verification will return "true" if this aggregated signature is valid.
6a) The verifier verifies that the hashes used in S5 match those returned by the program P. In this way, the hash (or hashes) received in the response is verified.

When all verification checks that are performed succeed, the verifier accepts the result. If one verification fails, the verifier rejects the result.

One or more of the examples shown above, have the advantage that a first party can gather and aggregate data, and send the result to a second party, so that (1) the first party is guaranteed that no sensitive data is leaked, and (2) the second party is guaranteed that the results were processed correctly. The first party is guaranteed that a query on the data can only run if it is approved, hence, leaks no confidential data. The second party is guaranteed that: the data is coming from trusted devices, the data has not been tampered with by the customer, and the data was aggregated according to a pre-approved algorithm.

In examples, by moving the verification of signatures from the prover (i.e. first party) to the verifier (i.e. second party), with a ZKP system, then this saves on computing processing power (for the first party), and reduces latency for the query to return. Furthermore, by aggregating the signatures before transmission to the verifier, this further saves on memory usage (for the first party) and computing processing power (for the second party), and reduces bandwidth for the query to return.

Figure 6 shows an example method flow performed by an apparatus. The apparatus may be comprised in a responder device. The apparatus may be for a responder device. The apparatus may be a responder device. In examples, the responder device is a server.

In S601, the method comprises receiving information from a device, wherein the information comprises: i) data associated with the device, and ii) a signature of the data.

In S603, the method comprises receiving, from a requester device, a query.

In S605, the method comprises executing the query with a program, using the information as an input, to return a result of the query.

In S607, the method comprises calculating a hash based on the data.

In S609, the method comprises using a zero-knowledge proof system with the program to generate a proof associated with the executed query.

In S611, the method comprises providing, to the requester device, a response comprising: the result of the query, the hash, the proof, and the signature of the data.

Figure 7 shows an example method flow performed by an apparatus. The apparatus may be comprised in a requester device. The apparatus may be for a requester device. The apparatus may be a requester device. In examples, the requester device is a server.

In S701, the method comprises providing, to a responder device, a query.

In S703, the method comprises receiving, from the responder device, a response comprising: a result of the query, a hash, a proof, and a signature associated with data.

In S705, the method comprises verifying: i) the result of the query using a zero-knowledge proof system using the proof as an input, and ii) the signature associated with the data using: the hash and a public key of a device.

Figure 8 shows a schematic representation of non-volatile memory media 800a (e.g. computer disc (CD) or digital versatile disc (DVD)) and 800b (e.g. universal serial bus (USB) memory stick) storing instructions and/or parameters 802 which when executed by a processor allow the processor to perform one or more of the steps of the methods of Figure 6 and/or Figure 7.

It is noted that while the above describes example embodiments, there are several variations and modifications which may be made to the disclosed solution without departing from the scope of the present invention.

The examples may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The examples may be implemented by computer software stored in a memory and executable by at least one data processor of the involved entities or by hardware, or by a combination of software and hardware. Further in this regard it should be noted that any procedures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The term "non-transitory", as used herein, is a limitation of the medium itself (i.e. tangible, not a signal) as opposed to a limitation on data storage persistency (e.g. RAM vs ROM).

As used herein, "at least one of the following:<a list of two or more elements>" and "at least one of: <a list of two or more elements>" and similar wording, where the list of two or more elements are joined by "and", or "or" or ",", means at least any one of the elements, or at least any two or more of the elements, or at least all of the elements.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi core processor architecture, as non-limiting examples.

Alternatively, or additionally some examples may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device. The term circuitry also covers, for example and if applicable to the particular claim element, a baseband integrated circuit or processor integrated circuit for a mobile device or a similar integrated circuit in a server, a cellular network device, or other computing or network device.

The foregoing description has provided by way of exemplary and non-limiting examples a full and informative description of some embodiments. However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

## Claims

1. An apparatus comprising:
means for receiving information from a device, wherein the information comprises: i) data associated with the device, ii) a signature of the data, and iii) randomly generated data;
means for receiving, from a requester device, a query;
means for executing the query with a program, using the information as an input, to return a result of the query;
means for calculating a hash based on the data and the randomly generated data;
means for using a zero-knowledge proof system with the program to generate a proof associated with the executed query; and
means for providing, to the requester device, a response comprising: the result of the query, the hash, the proof, and the signature of the data.

2. The apparatus according to claim 1, wherein the apparatus comprises:
means for determining whether the received query adheres to a policy of a responder device; and
means for, based on the determining, continuing with the execution of the query, or returning a response indicating an error to the requester device.

3. The apparatus according to any of claims 1 to 2, wherein the means for executing the query with the program comprises:
means for parsing and compiling the query to the program; and
means for executing the program with the embedded query, using the information as an input, to return a result of the query

4. The apparatus according to any of claims 1 to 3, wherein the apparatus comprises: means for receiving at least some further information from at least one of the following of: the device, or at least one further device, wherein the least some further information comprises: i) further data, ii) a further signature, and iii) further randomly generated data.

5. The apparatus according to claim 4, wherein at least one of the following: the signature of the information, or the further signature of the at least some further information, was generated using a signature aggregation scheme.

6. The apparatus according to claim 4 or claim 5, wherein the apparatus comprises:
means for aggregating the signature and the further signature to generate an aggregated signature, wherein the response comprises the aggregated signature.

7. The apparatus according to any of claims 1 to 6, wherein the information comprises metadata associated with at least one of the following: the device, or the data.

8. The apparatus according to any of claims 1 to 7, wherein the program returns: the result of the query, and the metadata.

9. The apparatus according to any of claims 1 to 8, wherein the signature of the information comprises: a string including i) a hash of the data, and ii) metadata, wherein the string is signed by the device.

10. The apparatus according to any of claims 1 to 9, wherein the information comprises: the data, the hash of the data, the device identifier, the timestamp, and the signature of the data, and a public key of the device.

11. An apparatus comprising:
means for providing, to a responder device, a query;
means for receiving, from the responder device, a response comprising: a result of the query, a hash, a proof, and a signature associated with data;
means for verifying: i) the result of the query using a zero-knowledge proof system using the proof as an input, and ii) the signature associated with the data using: the hash and a public key of a device.

12. The apparatus according to claim 11, wherein the means for verifying comprises: means for verifying: iii) that the hash received in the response corresponds to a hash that can be validated, using: the signature, and the public key of the device.

13. The apparatus according to claim 11 or claim 12, wherein the means for receiving comprises:
means for receiving, from the responder device, the response comprising: a result of the query, at least two hashes, a proof, and an aggregated signature; and
wherein the means for verifying comprises:
means for verifying ii) the aggregated signature using: the at least two hashes and the public key of the device.

14. The apparatus according to any of claims 11 to 13, wherein the response comprises metadata associated with at least one of the following: the device, or the data.

15. The apparatus according to any of claims 11 to 14, wherein the means for verifying comprises:
means for verifying that a set of expected devices were included in the executed query using a list of device identifiers stored at a requester device, and the metadata received in the response.

16. The apparatus according to any of claims 11 to 15, wherein the means for verifying comprises:
means for verifying that the query was executed on recent data by comparing timestamp information of the metadata to a threshold time value.
